# EUROPEAN PATENT SPECIFICATION

(11) **EP 3 406 494 B1**
(45) Date of publication and mention of the grant of the patent: **25.11.2020**
(21) Application number: 17741132.9
(22) Date of filing: 11.01.2017
(51) Int. Cl.: B60S 3/04, B05B 7/32, B01F 3/00, F16K 31/06

(54) **METERING DEVICE FOR A WASHING FACILITY**
MESSVORRICHTUNG FÜR EINE WASCHEINRICHTUNG
DISPOSITIF DE DOSAGE POUR CENTRE DE LAVAGE

(30) Priority: 18.01.2016 ES 201630051 U
(43) Date of publication of application: 28.11.2018
(73) Proprietor: Istobal, S.A., 46250 La Alcudia (Valencia) (ES)
(72) Inventor: TOMÁS PUCHADES, Yolanda, 46250 La Alcudia (Valencia) (ES)
(74) Representative: Ungria López, Javier
(86) International application number: PCT/ES2017/070014
(87) International publication number: WO 2017/125630

(56) References cited:
- DE-A1-102011 054 987
- GB-A- 2 137 149
- US-A- 3 529 771
- US-A- 3 687 156
- US-A- 4 327 866
- US-A- 5 383 605
- US-A- 6 125 860
- US-A1- 2003 127 534

## Description

### Object of the invention

The present invention relates to a metering device for a washing facility, especially intended for use in manual car washing facilities by means of high-pressure water jets.

The present invention makes it possible to use a single pump for each chemical product added to the wash water, thereby achieving a reduction in the cost of the washing facility and substantial energy savings.

The metering device for a washing facility that is the object of this invention is applicable in the industrial sector dedicated to the manufacture and installation of vehicle washing facilities.

### Technical problem to be solved and background of the invention

Current car washing facilities are usually composed by self-service booths or boxes equipped with a high-pressure water jet. Users who access said facilities with their car handle the high-pressure jet to project high-pressure water against the windows, wheels and body of their car, washing and removing the dirt adhered to their car.

Conventionally, manual car washing facilities have various washing bays (one per each high-pressure water jet) that use hot water and detergent at a pressure between 80 and 120 bar. Water is projected onto the vehicle in different phases, which range from pre-washing with chemical descalers, washing with high-pressure detergents and rinsing with demineralised water and wax. Washing facility bays usually have full autonomy, due to which each bay has its own independent circuit with a high-pressure pump and chemical product metering device, each of which is also equipped with its own dispensing pump, one pump per each chemical product to be dispensed and per each of the washing bays in the facility.

Document US2003127534 discloses a chemical ratio proportioning apparatus intended primarily for use in a wash bay of a vehicle wash system wherein a chemical is provided under pressure from chemical pumps, under control of a control unit and flow sensors, and wherein the control unit controls metering devices such as a metering pump and/or one or more proportioning solenoid valves to control the quantity of chemical entering the system.

The technical problem solved through the metering device for a washing facility that is the object of the present invention is the simplification of the design of manual car washing facilities, the reduction in cost of said facilities and considerable energy savings through the use of a single pump per each chemical product to be dispensed, regardless of the number of washing bays in the facility.

### Description of the invention

For the purpose of providing a technical and economically advantageous solution to the high consumption of manual car washing facilities, a metering device for the car washing facility is provided which, as mentioned earlier, uses a single metering pump per each chemical product to be dispensed, regardless of the number of bays in the washing facility.

The metering device for a car washing facility comprises at least one chemical product dispensing unit, wherein said chemical product is dispensed to at least one washing bay in a washing facility.

The metering device comprises, per each dispensing unit, at least as many chemical product pipes as the number of washing bays existing in the washing facility.

As mentioned earlier, the device comprises a single chemical product force pump (or dispensing pump) per each dispensing unit.

Additionally, the device comprises a control unit, electrically connected to each washing bay, which controls the driving force of the force pump of each dispensing unit in accordance with the number of bays in the washing facility that demands the chemical product dispensed by said dispensing unit.

Said control is typically achieved by controlling the number of pulses of the force pump, which is preferably proportional to the number of washing bays which, at any given time, demand the chemical product dispensed by a dispensing unit.

Each pipe of each dispensing unit has at least one electrovalve controlled by the control unit. The control unit controls the opening/closure of each electrovalve of each pipe in accordance with the demand for chemical product by each washing bay. Therefore, depending on the number of washing bays that demand the chemical product dispensed by a dispensing unit, the control unit orders the opening of the electrovalves corresponding to the pipes that run to the washing bays that demand said chemical product.

Preferably, each chemical product pipe of each dispensing unit is connected to a washing bay by means of a wash water diversion line connected to a wash water conduction line.

The control unit activates the conduction of chemical product via each pipe, ordering the opening of the electrovalve of said pipe, while ordering the opening of at least one electrovalve of the wash water diversion whereto said pipe is connected, all in accordance with a predetermined wash programme.

According to a preferred embodiment of the metering device for a washing facility that is the object of the present invention, at least one dispensing unit is configured to dispense detergent contained in a tank.

Also, according to a preferred embodiment of the metering device for a washing facility that is the object of the present invention, at least one dispensing unit is configured to dispense detergent contained in a tank.

### Brief description of the figures

The following figures have been included as part of the explanation of at least one preferred embodiment of the metering device for a car washing facility:
FIGURE 1. Shows a schematic view of a conventional metering device for a car washing facility.
FIGURE 2. Shows a schematic view of the metering device for a car washing facility that is the object of the present invention.

### Detailed description

As mentioned earlier, the present invention relates to a metering device for a car washing facility, especially intended for use in manual car washing facilities.

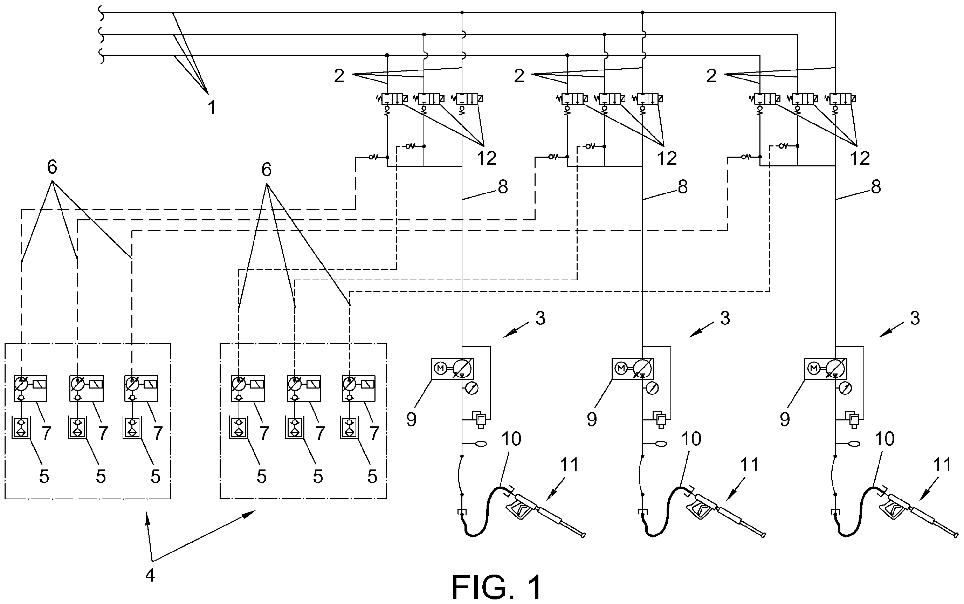

Figure 1 shows a schematic view of a conventional metering device for a car washing facility. As can be observed in Figure 1, conventional washing facilities comprise a plurality of wash water conduction lines 1, each of said lines 1 being intended for conducting water with different additives and/or with different physico-chemical properties.

Each wash water conduction line 1 has the same number of diversions 2 as the number of washing bays 3 existing in the washing facility. Therefore, each washing bay 3 is connected to the same number of diversions 2 as the number of existing wash water conduction lines 1.

Figure 1 shows that each washing bay 3 is connected to a conventional chemical product metering device. The device is composed by two chemical product metering units 4, each of which is intended for dispensing a chemical product to each washing bay 3.

Each dispensing unit 4 comprises at least one chemical product tank 5 and at least one chemical product pipe 6 per each of the washing bays 3 existing in the washing facility. Also, each dispensing unit 4 comprises a chemical product force pump 7 per each chemical product pipe 6, i.e. each chemical product dispensing unit 4 has the same number of chemical product force pumps 7 as the number of washing bays 3 existing in the facility. Figure 1 shows a facility with three washing bays 3, due to which the metering device comprises three chemical product force pumps 7 per each of its two dispensing units 4.

Each chemical product pipe 6 of each dispensing unit 4 is connected, respectively, to a wash water diversion 2 in each of the washing bays 3. Subsequently, the wash water diversions 2 are connected to a washing bay pipe 8 which, through a high-pressure pump 9, is connected to a hose 10, which in turn comprises aa wash water jet 11 at the end thereof.

According to figure 1, there is a wash water diversion 2 in each of the washing bays 3 which is not connected to any chemical product pipe 6.

Typically, one of the dispensing units 4 is intended for supplying detergent to each washing bay 3. Another of the dispensing units 4 is typically intended for supplying wax to each washing bay 3.

In each washing bay 3, wax is typically supplied to a demineralised water diversion 2, while the detergent is supplied to a conventional diversion 2 of hot water from the mains supply. Another of the diversions 2 in each washing bay 3, whereto no chemical product pipe 6 is connected, typically comes from a wash water line 1 that supplies conventional water to the distribution network, or water with a descaling agent.

Each diversion 2 comprises, between its connection with the wash water line 1 and its connection to the pipe 6 of chemical product from a dispensing unit 4, an electrovalve 12, which is actuated in accordance with the predetermined wash programme. Therefore, the wash programme determines which diversions 2 are open and closed at each car wash stage. The wash programme also determines, in accordance with the diversion 2 that is conducting wash water at each car wash stage, the force pump 7 of each dispensing unit 4 that will be activated.

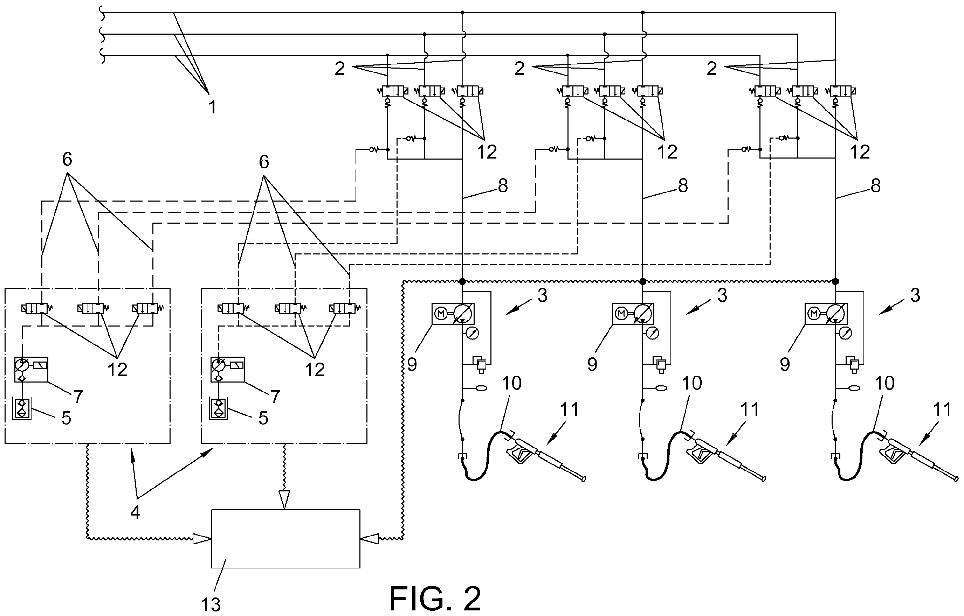

Figure 2 shows a schematic view of the metering device for a washing facility that is the object of the present invention.

The device comprises, like the device shown in Figure 1, two dispensing units 4, intended for supplying chemical products (typically detergent and wax, respectively). As in the conventional case shown in Figure 1, each chemical product dispensing unit 4 has three chemical product pipes 6, one per each of the washing bays 3 in the facility.

Each of the pipes 6 of each dispensing unit 4 is connected, respectively, to a wash water diversion 2 in each of the washing bays 3. Each diversion 2 comprises an electrovalve 12 and all the diversions 2 of each washing bay 3 are connected to a bay conduit 8, provided with a high-pressure pump 9 ending in a hose 10 comprising a wash water jet 11.

The difference between the metering device shown in Figure 2 and the conventional device shown in Figure 1 is that the new metering device does not comprise a force pump 7 per each chemical product pipe 6, in each of the dispensing units 4. On the contrary, the new metering device comprises a single force pump 7 per each dispensing unit 4, regardless of the number of chemical product pipes 6 emerging from said dispensing unit 4, i.e. regardless of the number of washing bays 3 existing in the facility.

Additionally, the new metering device for a washing facility that is the object of the present invention has an electrovalve 12 in each of the chemical product pipes 6 of each dispensing unit 4. Both the electrovalves 12 of each chemical product pipe 6 and the force pump 7 of each dispensing unit 4 are connected to a control unit 13, which in turn is electrically connected to each of the washing bays 3 in the facility.

In accordance with the number of washing bays 3 which are demanding a same chemical product at any given time, the control unit 13 orders the electrovalves 12 of the pipes 6 of each dispensing unit 4 to open or close, depending on whether or not the washing bays 3 whereto said pipes 6 are connected are demanding the chemical product dispensed by said dispensing unit 4.

Simultaneously, if the control unit 13 determines that more than one electrovalve 12 (i.e. more than one pipe 6) of a same dispensing unit 4 is open at any given time the control unit 13 also determines an increase in the driving force of the force pump 7 of each dispensing unit 4 proportional to the number of open pipes 6 in each dispensing unit 4. This proportional increase in the driving force of the force pump 7 is achieved by increasing the number of control pulses sent by the control unit 13 to the force pump 7 of each dispensing unit 4. Therefore, the force pump 7 increases the number of pulses (number of revolutions per unit of time), thereby increasing the driving force when chemical product must be supplied to a larger number of pipes 6.

## Claims

1. A metering device for a washing facility comprising at least one chemical product dispensing unit (4) to at least one washing bay (3) in a washing facility, wherein the device comprises, per each dispensing unit (4), at least the same number of chemical product pipes (6) as the number of existing washing bays (3) in the washing facility, **characterised in that** it comprises a single chemical product force pump (7) per each dispensing unit (4) and a control unit (13), electrically connected to each washing bay, wherein said control unit (13) controls the driving force of the force pump (7) of each dispensing unit (4) in accordance with the number of washing bays (3) in the washing facility that demand the chemical product dispensed by said dispensing unit (4).

2. The metering device, according to claim 1, **characterised in that** each pipe (6) of each dispensing unit (4) is equipped with at least one electrovalve (12) controlled by the control unit (13), wherein the control unit (13) controls the opening/closure of the at least one electrovalve (12) of each pipe (6) in accordance with the demand for chemical product of each washing bay (3).

3. The metering device, according to claim 2, **characterised in that** each chemical product pipe (6) of each dispensing unit (4) is connected to a washing bay (3) through a wash water diversion (2) connected to a washing bay (3) via a wash water diversion (2) connected to a wash water conduction line (1).

4. The metering device, according to claim 3, **characterised in that** the control unit (13) activates the conduction of chemical product through each pipe (6), ordering the opening of the electrovalve (12) of said pipe (6) while ordering the opening of at least one electrovalve (12) of the wash water diversion (2) whereto the pipe (6) is connected, all in accordance with a predetermined wash programme.

5. The metering device, according to any of the preceding claims, **characterised in that** at least one dispensing unit (4) is configured to dispense detergent contained in a tank (5).

6. The metering device, according to any of the preceding claims, **characterised in that** at least one dispensing unit (4) is configured to dispense wax contained in a tank (5).

## Patentansprüche

1. Dosiervorrichtung für eine Waschanlage, die wenigstens eine Einheit (4) zum Abgeben chemischer Produkte an wenigstens einen Waschplatz (3) in einer Waschanlage umfasst, wobei die Vorrichtung für jede Abgabe-Einheit (4) wenigstens die gleiche Anzahl von Rohren (6) für chemische Produkte wie die Anzahl vorhandener Waschplätze (3) in der Waschanlage umfasst, **dadurch gekennzeichnet, dass** sie eine einzelne Druckpumpe (7) für chemische Produkte für jede Abgabe-Einheit (4) sowie eine Steuerungs-Einheit (13) umfasst, die elektrisch mit jedem Waschplatz verbunden ist, wobei die Steuerungs-Einheit (13) die Antriebskraft der Druckpumpe (7) jeder Abgabe-Einheit (4) entsprechend der Anzahl von Waschplätzen (3) in der Waschanlage steuert, die das von der Abgabe-Einheit (4) abgegebene chemische Produkt anfordern.

2. Dosiervorrichtung nach Anspruch 1, **dadurch gekennzeichnet, dass** jedes Rohr (6) jeder Abgabe-Einheit (4) mit wenigstens einem Elektroventil (12) ausgestattet ist, das von der Steuerungs-Einheit (13) gesteuert wird, wobei die Steuerungs-Einheit (13) das Öffnen/Schließen des wenigstens einen Elektroventils (12) jedes Rohrs (6) entsprechend der Anforderung von chemischem Produkt jedes Waschplatzes (3) steuert.

3. Dosiervorrichtung nach Anspruch 2, **dadurch gekennzeichnet, dass** jedes Rohr (6) für chemische Produkte jeder Abgabe-Einheit (4) mit einem Waschplatz (3) über einen Waschwasser-Umleitweg (2) verbunden ist, der mit einem Waschplatz (3) über einen Waschwasser-Umleitweg (2) verbunden ist, der mit einem Waschwasser-Leitungsweg (1) verbunden ist

4. Dosiervorrichtung nach Anspruch 3, **dadurch gekennzeichnet, dass** die Steuerungs-Einheit (13), jeweils entsprechend einem vorgegebenen Waschprogramm, die Leitung von chemischem Produkt über jedes Rohr (6) aktiviert, das Öffnen des Elektroventils (12) des Rohrs (6) anweist und gleichzeitig das Öffnen wenigstens eines Elektroventils (12) des Waschwasser-Umleitweges (2) anweist, mit dem das Rohr (6) verbunden ist.

5. Dosiervorrichtung nach einem der vorangehenden Ansprüche, **dadurch gekennzeichnet, dass** wenigstens eine Abgabe-Einheit (4) so ausgeführt ist, dass sie in einem Tank (5) enthaltenes Reinigungsmittel abgibt.

6. Dosiervorrichtung nach einem der vorangehenden Ansprüche, **dadurch gekennzeichnet, dass** wenigstens eine Abgabe-Einheit (4) so ausgeführt ist, dass sie in einem Tank (5) enthaltenes Wachs abgibt.

## Revendications

1. Dispositif de dosage pour une installation de lavage comprenant au moins une unité de distribution de produit chimique (4) à au moins une station de lavage (3) dans une installation de lavage, dans lequel le dispositif comprend, pour chaque unité de distribution (4), au moins le même nombre de tuyaux de produit chimique (6) que le nombre de stations de lavage existantes (3) dans l'installation de lavage, **caractérisé en ce qu'**il comprend une seule pompe foulante de produit chimique (7) pour chaque unité de distribution (4) et une unité de contrôle (13), électriquement connectée à chaque station de lavage, dans lequel ladite unité de contrôle (13) contrôle la force motrice de la pompe foulante (7) de chaque unité de distribution (4) selon le nombre de stations de lavage (3) dans l'installation de lavage qui demandent le produit chimique distribué par ladite unité de distribution (4).

2. Dispositif de dosage, selon la revendication 1, **caractérisé en ce que** chaque tuyau (6) de chaque unité de distribution (4) est équipé d'au moins une électrovanne (12) contrôlée par l'unité de contrôle (13), dans lequel l'unité de contrôle (13) contrôle l'ouverture/fermeture de la au moins une électrovanne (12) de chaque tuyau (6) selon la demande pour le produit chimique de chaque station de lavage (3).

3. Dispositif de dosage, selon la revendication 2, **caractérisé en ce que** chaque tuyau de produit chimique (6) de chaque unité de distribution (4) est connecté à une station de lavage (3) par l'intermédiaire d'une dérivation d'eau de lavage (2) connectée à une station de lavage (3) via une dérivation d'eau de lavage (2) connectée à une ligne de conduction d'eau de lavage (1).

4. Dispositif de dosage, selon la revendication 3, **caractérisé en ce que** l'unité de contrôle (13) active la conduction de produit chimique à travers chaque tuyau (6), ordonnant l'ouverture de l'électrovanne (12) dudit tuyau (6) tout en ordonnant l'ouverture d'au moins une électrovanne (12) de la dérivation d'eau de lavage (2) à laquelle le tuyau (6) est connecté, le tout selon un programme de lavage prédéterminé.

5. Dispositif de dosage, selon l'une quelconque des revendications précédentes, **caractérisé en ce que** au moins une unité de distribution (4) est configurée pour distribuer du détergent contenu dans un réservoir (5).

6. Dispositif de dosage, selon l'une quelconque des revendications précédentes, **caractérisé en ce qu'**au moins une unité de distribution (4) est configurée pour distribuer de la cire contenue dans un réservoir (5).
